# EUROPÄISCHE PATENTSCHRIFT

(11) **EP 2 539 192 B1**
(45) Veröffentlichungstag und Bekanntmachung des Hinweises auf die Patenterteilung: **11.03.2020**
(21) Anmeldenummer: 11702010.7
(22) Anmeldetag: 28.01.2011
(51) Int. Cl.: B60T 8/32, B60T 8/46, B60T 13/14

(54) **VERFAHREN ZUM BETREIBEN EINES BREMSSYSTEMS EINES FAHRZEUGS SOWIE BREMSSYSTEM**
METHOD FOR OPERATING A BRAKE SYSTEM OF A VEHICLE, AND BRAKE SYSTEM
PROCÉDÉ POUR FAIRE FONCTIONNER UN SYSTÈME DE FREINAGE D'UN VÉHICULE ET SYSTÈME DE FREINAGE

(30) Priorität: 25.02.2010 DE 102010002324
(43) Veröffentlichungstag der Anmeldung: 02.01.2013
(73) Patentinhaber: Robert Bosch GmbH, 70442 Stuttgart (DE)
(72) Erfinder: STREHLE, Alfred, 70736 Fellbach (DE); EISELE, Achim, 74394 Hessigheim (DE)
(86) Internationale Anmeldenummer: PCT/EP2011/051214
(87) Internationale Veröffentlichungsnummer: WO 2011/104064

(56) Entgegenhaltungen:
- DE-A1- 3 839 178
- DE-A1- 19 825 139
- DE-A1-102008 055 663
- US-A- 5 884 986
- US-A1- 2005 023 889

## Beschreibung

Die Erfindung betrifft ein Verfahren zum Betreiben eines Bremssystems eines Fahrzeugs, wobei das Bremssystem mindestens eine einem Rad des Fahrzeugs zugeordnete Bremseinrichtung, die zum Aufbringen einer Bremskraft auf das Rad vorgesehen ist und der Bremsfluid aus einem Hauptbremszylinder zuführbar ist, und eine über ein Querschnittsverstellglied und einen Zwischenspeicher mit der Bremseinrichtung verbundene Fördereinrichtung aufweist, wobei zur Reduzierung der Bremskraft Bremsfluid aus der Bremseinrichtung über das Querschnittsverstellglied gesteuert und/oder geregelt in den Zwischenspeicher abgelassen und mittels der Fördereinrichtung in den Hauptbremszylinder gefördert werden kann, wobei das Ablassen des Bremsfluids aus der Bremseinrichtung des Bremssystems zumindest zeitweise mit einem Ablassvolumenstrom erfolgt, der größer ist als der Maximalfördervolumenstrom der Fördereinrichtung. Die Erfindung betrifft weiterhin ein Bremssystem.

### Stand der Technik

Verfahren der eingangs genannten Art sind aus dem Stand der Technik bekannt. Das Bremssystem hat dabei die Aufgabe, die Lenk- und Bremsfähigkeit, die Fahrstabilität und/oder die Traktion des Fahrzeugs zu verbessern. Ein derartiges Bremssystem ist beispielsweise ein ABS-, ASR- und/oder ESP-Bremssystem. Ersteres soll ein Blockieren von Rädern des Fahrzeugs während des Bremsens verhindern, um den bestmöglichen Kraftschluss zwischen Rad und Untergrund zu gewährleisten. Das Bremssystem weist die mindestens eine Bremseinrichtung auf, welche dem mindestens einen Rad des Fahrzeugs zugeordnet ist. Mittels der Bremseinrichtung kann die Bremskraft auf das Rad aufgebracht werden. Zu diesem Zweck wird der Bremseinrichtung das Bremsfluid aus dem Hauptbremszylinder zugeführt, beispielsweise aufgrund einer Betätigung eines Bremspedals, welches mit dem Hauptbremszylinder verbunden ist, durch einen Fahrer des Fahrzeugs. Wird das Bremsfluid aus dem Hauptbremszylinder der Bremseinrichtung zugeführt, wird demnach die Bremskraft auf das Rad aufgebaut beziehungsweise vergrößert.

Um die Bremskraft gezielt zu verringern, weist das Bremssystem weiterhin das Querschnittsverstellglied, den Zwischenspeicher und die Fördereinrichtung auf. Das Querschnittsverstellglied ist derart an die Bremseinrichtung angeschlossen, dass Bremsfluid gesteuert und/oder geregelt aus diesem abgelassen werden kann. Das abgelassene Fluid gelangt in den Zwischenspeicher beziehungsweise zu der Fördereinrichtung. Die Fördereinrichtung dient dazu, das aus der Bremseinrichtung abgelassene Bremsfluid entweder direkt oder aus dem Zwischenspeicher zu fördern und wieder dem Hauptbremszylinder zuzuführen, damit es erneut zum Erzeugen der Bremskraft zur Verfügung steht. Die Fördereinrichtung ist durch einen Maximalfördervolumenstrom gekennzeichnet, also den maximalen Volumenstrom, mit welchem Bremsfluid in den Hauptbremszylinder gefördert werden kann. Üblicherweise ist die Fördereinrichtung derart ausgelegt, dass der Maximalfördervolumenstrom größer ist als der maximale Ablassvolumenstrom, welcher in dem Bremssystem auftreten kann. Der Ablassvolumenstrom ist dabei der Volumenstrom, mit welchem das Bremsfluid aus der Bremseinrichtung beziehungsweise mehreren Bremseinrichtungen abgelassen wird und somit in den Zwischenspeicher beziehungsweise zu der Fördereinrichtung gelangt. Auf diese Weise soll sichergestellt werden, dass in jedem Betriebszustand das abgelassene Bremsfluid in den Hauptbremszylinder gefördert werden kann. Dies bedingt jedoch eine vergleichsweise große Auslegung der Fördereinrichtung.

Aus dem Stand der Technik ist beispielsweise die Druckschrift DE 38 39 178 A1 bekannt. Diese beschreibt ein Antiblockiersystem für ein Straßenfahrzeug, das auch mit einem Antriebs-Schlupf-Regelungssystem ausgerüstet ist, und eine hydraulische Zweikreis-Bremsanlage mit Vorderachs-/Hinterachs-Bremskreis-Aufteilung mit statischen Bremskreisen hat, wobei ein Bremskreis den angetriebenen (Hinter-)Rädern des Fahrzeugs zugeordnet ist sowie mit zwei, je einem der beiden Bremskreise zugeordneten Hochdruckpumpen, mittels derer in Regelphasen des ABS Bremsflüssigkeit in die Ausgangsdruckräume des Bremsgeräts einspeisbar ist. Dabei ist vorgesehen, dass die dem Hinterachs-Bremskreis zugeordnete Hochdruckpumpe auch als Hilfsdruckquelle für das ASR ausgenutzt wird. Das ABS arbeitet an dem Vorderachs-Bremskreis nach dem Rückförderprinzip und an dem Hinterachs-Bremskreis nach dem Ablass-Prinzip.

### Offenbarung der Erfindung

Demgegenüber weist das Verfahren zum Betreiben des Bremssystems mit den Merkmalen des Anspruchs 1 den Vorteil auf, dass die Fördereinrichtung des Bremssystems kleiner, also mit einer geringeren Leistung, ausgelegt werden kann. Dies wird erfindungsgemäß erreicht, indem bei Auftreten eines bestimmten Betriebszustands des Bremssystems, nämlich bei einer Fehlfunktion der Fördereinrichtung und/oder bei Überschreiten eines bestimmten Füllstandes des Zwischenspeichers, der Ablassvolumenstrom auf einen Wert reduziert wird, der kleiner oder gleich dem Maximalfördervolumenstrom ist, sodass das Ablassen des Bremsfluids aus der Bremseinrichtung zumindest zeitweise mit dem reduzierten Ablassvolumenstrom erfolgt. Grundsätzlich ist also zunächst vorgesehen, dass das Ablassen des Bremsfluids aus der Bremseinrichtung des Bremssystems zumindest zeitweise mit einem Ablassvolumenstrom erfolgt, der größer ist als der Maximalfördervolumenstrom der Fördereinrichtung, und dass Auftreten eines bestimmten Betriebszustands des Bremssystems der Ablassvolumenstrom reduziert wird. Zunächst sei angemerkt, dass der Begriff "Volumenstrom" stellvertretend für die Menge des Bremsfluids pro Zeiteinheit steht. Er könnte ebenso durch den Begriff "Massenstrom" ersetzt werden, wobei dann der Ablassvolumenstrom einem Ablassmassenstrom und der Maximalfördervolumenstrom einem Maximalfördermassenstrom entspricht. Ist der Ablassvolumenstrom dauerhaft größer als der Maximalfördervolumenstrom, so füllt sich der Zwischenspeicher. Ist dieser komplett gefüllt, kann kein weiteres Bremsfluid aus der Bremseinrichtung beziehungsweise den Bremseinrichtungen abgelassen werden. Somit kann die Funktion des Bremssystems, insbesondere des ABS-Bremssystems, nicht sicher gewährleistet werden. Ein solcher Zustand muss daher innerhalb des spezifizierten Funktionsbereiches des Bremssystems sicher vermieden werden.

Ist der Ablassvolumenstrom größer als der Maximalfördervolumenstrom, so liegt eine negative Volumenbilanz vor, das bedeutet, dass mehr Bremsfluid in den Zwischenspeicher abgelassen wird, als die Fördereinrichtung in den Hauptbremszylinder fördern kann. Aus dem Stand der Technik ist es nun bekannt, diese negative Volumenbilanz über eine entsprechende Dimensionierung der Fördereinrichtung zu vermeiden. Dagegen ist es das Ziel der Erfindung, die Fördereinrichtung so klein als möglich, also mit einer möglichst geringen Förderleistung, auszulegen. Insofern wird zumindest zeitweise zugelassen, dass der Ablassvolumenstrom größer ist als der Maximalfördervolumenstrom. Um die Funktionsfähigkeit des Bremssystems dauerhaft zu gewährleisten, wird bei Auftreten beziehungsweise Vorliegen des bestimmten Betriebszustands des Bremssystems der Ablassvolumenstrom reduziert. Die Reduzierung erfolgt dabei gegenüber einem Wert des Ablassvolumenstroms, welcher in einem Normalbetrieb - ohne Vorliegen des bestimmten Betriebszustands - gewählt werden würden. Auf diese Weise können mit einem vorhandenen Bremssystem höhere Bremsanforderungen aufgebracht oder bei gegebenen Bremsanforderungen das Bremssystem und insbesondere die Fördereinrichtung verkleinert, also mit einer geringeren Leistung ausgelegt werden. Die Reduzierung des Ablassvolumenstroms erfolgt lediglich in kritischen Betriebszuständen, welche ohnehin vergleichsweise selten auftreten.

Es ist vorgesehen, dass der bestimmte Betriebszustand eine Fehlfunktion der Fördereinrichtung und/oder ein Überschreiten eines bestimmten Füllstandes des Zwischenspeichers ist. In ersterem Fall wird der Ablassvolumenstrom prophylaktisch reduziert, weil abzusehen ist, dass die Fördereinrichtung das Bremsfluid nicht ausreichend schnell aus dem Zwischenspeicher beziehungsweise von der Bremseinrichtung in den Hauptbremszylinder abführen kann. Zusätzlich oder alternativ kann auch bei Überschreiten des bestimmten Füllstandes der Ablassvolumenstrom reduziert werden. Auf diese Weise kann verhindert werden, dass sich der Zwischenspeicher weiter beziehungsweise zu schnell füllt und auf diese Weise zumindest über eine verlängerte Zeitspanne die vollständige Funktionsfähigkeit des Bremssystems sichergestellt werden.

Weiterhin ist vorgesehen, dass der Ablassvolumenstrom bei der Fehlfunktion und/oder Überschreiten des bestimmten Füllstands gleich oder kleiner dem Maximalfördervolumenstrom gewählt wird. Der Maximalfördervolumenstrom entspricht stets dem maximalen Volumenstrom, mit welchem das Bremsfluid in den Hauptbremszylinder zurückgefördert werden kann. Idealerweise wird bei der Bestimmung des Maximalfördervolumenstroms auch die Fehlfunktion der Fördereinrichtung berücksichtigt. In diesem Fall wird der Maximalfördervolumenstrom beispielsweise mittels eines Modells oder aus Messwerten bestimmt. Liegt die Fehlfunktion vor, so ist es sinnvoll, den Ablassvolumenstrom gleich oder kleiner dem Maximalfördervolumenstrom zu wählen, um zu verhindern, dass sich der Zwischenspeicher (zu schnell) füllt und so die Funktionsfähigkeit des Bremssystems zumindest teilweise beeinträchtigt. Auf diese Weise kann unter Nominalbedingungen, also ohne das Vorliegen der Fehlfunktion, das Bremssystem optimal eingesetzt werden, wobei die Fördereinrichtung kleiner als aus dem Stand der Technik bekannt ausgelegt werden kann, und dennoch die Funktionsfähigkeit des Bremssystems stets sichergestellt wird.

Eine Weiterbildung der Erfindung sieht vor, dass eine Betriebsspannung der Fördereinrichtung überwacht wird und bei einem Unterschreiten einer bestimmten Mindestspannung die Fehlfunktion angezeigt wird. Die Fehlfunktion kann sich beispielsweise durch einen Fehler in der Spannungsversorgung der Fördereinrichtung ergeben. Aus diesem Grund wird die Betriebsspannung überwacht. Sinkt sie unter einen bestimmten Wert, die Mindestspannung, so wird die Fehlfunktion angezeigt, und folglich der Ablassvolumenstrom reduziert. Die Reduktion des Ablassvolumenstroms erfolgt dabei vorteilhafterweise anhand eines Vergleiches der gemessenen Betriebsspannung mit einer nominalen Betriebsspannung.

Eine Weiterbildung der Erfindung sieht vor, dass der Füllstand des Zwischenspeichers anhand eines Füllstandsmodells bestimmt wird. Üblicherweise weist der Zwischenspeicher des Bremssystems keinen Füllstandsanzeiger auf, mit welchem der Füllstand des Zwischenspeichers festgestellt werden kann. Aus diesem Grund wird der Füllstand mittels des Füllstandsmodells bestimmt beziehungsweise abgeschätzt. Auf diese Weise kann stets zumindest ein ungefährer Wert für den Füllstand abgeschätzt werden. Überschreitet der abgeschätzte Füllstand den bestimmten Füllstand, so wird der Ablassvolumenstrom reduziert. Selbstverständlich kann zum Bestimmen des Füllstands zusätzlich oder alternativ auch mindestens ein Sensor vorgesehen sein.

Eine Weiterbildung der Erfindung sieht vor, dass das Füllstandsmodell als Eingangsgrößen den Ablassvolumenstrom und mindestens eine Betriebskenngröße der Fördereinrichtung aufweist. Ausgehend von einem Ausgangswert kann mit Hilfe des Füllstandsmodells der Füllstand festgestellt werden, wenn zumindest die Volumenströme bekannt sind, mit welchen das Bremsfluid in den Zwischenspeicher hinein- beziehungsweise aus diesem hinausgelangt. Der momentane Fördervolumenstrom der Fördereinrichtung ist dabei eine Betriebskenngröße der Fördereinrichtung. Zusätzlich können auch weitere Betriebskenngrößen, beispielsweise die Betriebsspannung der Fördereinrichtung, verwendet werden.

Eine Weiterbildung der Erfindung sieht vor, dass mehrere Bremseinrichtungen an den Zwischenspeicher angeschlossen werden. In diesem Fall entspricht der Ablassvolumenstrom dem Volumenstrom, mit welchem das Bremsfluid aus allen an den Zwischenspeicher angeschlossenen Bremseinrichtungen abgelassen wird. Die Fördereinrichtung muss also in der Lage sein, diesen kombinierten Ablassvolumenstrom aus dem Zwischenspeicher beziehungsweise von den Bremseinrichtungen abzuführen.

Eine Weiterbildung der Erfindung sieht vor, dass zum Reduzieren des Ablassvolumenstroms das Zuführen des Bremsfluids aus dem Hauptzylinder mit einem geringeren Volumenstrom erfolgt und/oder eine Wartezeit zwischen Erreichen eines Vorgabedrucks in der Bremseinrichtung und dem Ablassen des Bremsfluids größer gewählt und/oder der beim Zuführen des Bremsfluids zu erreichende Vorgabedruck reduziert wird. Mit diesen Maßnahmen kann erreicht werden, dass Bremsfluid seltener und in geringerer Menge über das Querschnittsverstellglied aus der Bremseinrichtung beziehungsweise den Bremseinrichtungen abgelassen werden muss. Wird der Bremseinrichtung das Bremsfluid mit dem geringeren Volumenstrom zugeführt, so steigt die Bremskraft in dieser langsamer an, sodass ein Abbau der Bremskraft erst zu einem späteren Zeitpunkt notwendig wird. Diese Maßnahme kann also einhergehen mit einer Reduzierung der Regelfrequenz des Bremssystems beziehungsweise der Bremseinrichtung. Zusätzlich oder alternativ kann eine Druckhaltezeit vergrößert werden, welcher der Wartezeit zwischen dem Erreichen des Vorgabedrucks in der Bremseinrichtung und dem Ablassen des Bremsfluids entspricht. Auch auf diese Weise wird eine Verringerung der Regelfrequenz erreicht. Üblicherweise arbeitet das Bremssystem derart, dass der Bremseinrichtung das Bremsfluid bis zu dem Erreichen eines bestimmten Vorgabedrucks beziehungsweise einer Vorgabebremskraft das Bremsfluid zugeführt wird. Anschließend wird das Bremsfluid über das Querschnittsverstellglied aus der Bremseinrichtung abgelassen. Um den Ablassvolumenstrom zu reduzieren, kann nun dieser Vorgabedruck reduziert werden, beispielsweise durch eine empfindlichere Aktivierung der Druckhaltephase. Die genannten Werte werden jeweils gegenüber einem Wert reduziert oder größer gewählt, welcher in einem Normalbetrieb des Bremssystems, also ohne Vorliegen des bestimmten Betriebszustands, gewählt werden würde.

Eine Weiterbildung der Erfindung sieht vor, dass zum Reduzieren des Ablassvolumenstroms bei mehreren Bremseinrichtungen das Rad mit der höchsten Blockierneigung zum Steuern und/oder Regeln des Ablassens des Bremsfluids nicht berücksichtigt wird. Bei dieser Ausführungsform sind demnach mehrere Bremseinrichtungen vorhanden, welche jeweils einem Rad des Fahrzeugs zugeordnet sind. Üblicherweise werden zumindest zwei der Bremseinrichtungen gemeinsam gesteuert beziehungsweise geregelt, sodass bei diesen gleichzeitig Bremsfluid abgelassen wird, wenn lediglich eines der Räder eine bestimmte Blockierneigung aufweist ("Select Low"-Betrieb). Daraus ergibt sich die größte Fahrstabilität des Fahrzeugs, weil das Auftreten von Gier- beziehungsweise Lenkmomenten verhindert wird. Allerdings vergrößert sich auch ein Bremsweg des Fahrzeugs, weil bei dem Rad oder den Rädern, welche nicht die höchste Blockierneigung zeigen, lediglich eine geringere Bremskraft als möglich eingestellt wird. Allerdings vergrößert dieser "Select Low"-Betrieb auch den Ablassvolumenstrom. Um diesen zu verringern, wird demnach der "Select Low"-Betrieb verhindert und vorzugsweise eine individuelle Steuerung und/oder Regelung jeder Bremseinrichtung durchgeführt.

Die Erfindung betrifft weiterhin ein Bremssystem eines Fahrzeugs, insbesondere zur Umsetzung des Verfahrens gemäß den vorstehenden Ausführungen, wobei das Bremssystem mindestens eine einem Rad des Fahrzeugs zugeordnete Bremseinrichtung, die zum Aufbringen einer Bremskraft auf das Rad vorgesehen ist und der Bremsfluid aus einem Hauptbremszylinder zuführbar ist, und eine über ein Querschnittsverstellglied und einen Zwischenspeicher mit der Bremseinrichtung verbundene Fördereinrichtung aufweist, wobei zur Reduzierung der Bremskraft Bremsfluid aus der Bremseinrichtung über das Querschnittsverstellglied gesteuert und/oder geregelt in den Zwischenspeicher abgelassen und mittels der Fördereinrichtung in den Hauptbremszylinder gefördert werden kann. Dabei ist das Bremssystem derart ausgebildet, dass das Ablassen des Bremsfluids aus der Bremseinrichtung des Bremssystems zumindest zeitweise mit einem Ablassvolumenstrom erfolgt, der größer ist als der Maximalfördervolumenstrom der Fördereinrichtung. Weiterhin ist vorgesehen, dass bei Auftreten eines bestimmten Betriebszustands des Bremssystems, nämlich bei einer Fehlfunktion der Fördereinrichtung und/oder bei Überschreiten eines bestimmten Füllstandes des Zwischenspeichers, der Ablassvolumenstrom auf einen Wert reduziert wird, der kleiner oder gleich dem Maximalfördervolumenstrom ist, sodass das Ablassen des Bremsfluids aus der Bremseinrichtung zumindest zeitweise mit dem reduzierten Ablassvolumenstrom erfolgt. Das Bremssystem des Fahrzeugs kann gemäß den vorstehenden Ausführungen weitergebildet sein.

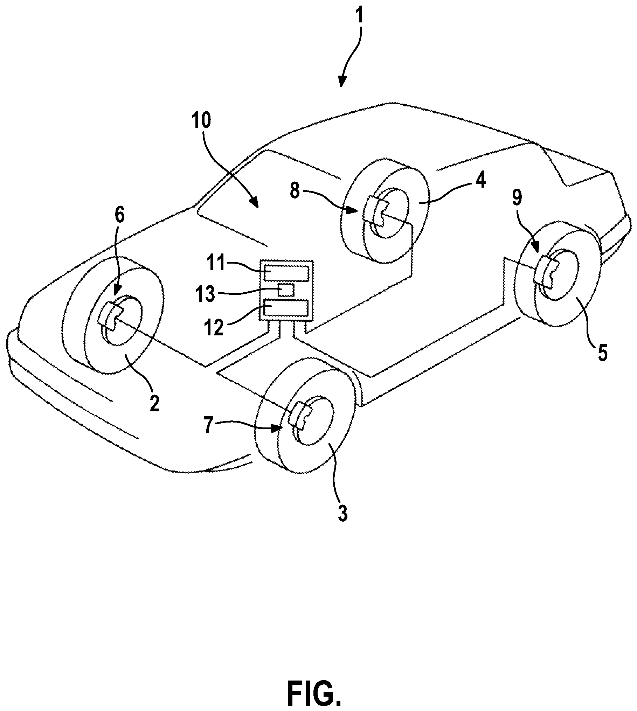

Die Erfindung wird im Folgenden anhand der in der Zeichnung dargestellten Ausführungsbeispiele näher erläutert, ohne dass eine Beschränkung der Erfindung erfolgt. Es zeigt die einzige
- Figur: eine schematische Ansicht eines Fahrzeugs mit einem Bremssystem.

Die Figur zeigt ein Fahrzeug 1 mit Rädern 2, 3, 4 und 5, welchen jeweils eine Bremseinrichtung 6, 7, 8 beziehungsweise 9 zugeordnet ist. Die Bremseinrichtungen 6, 7, 8 und 9 sind Bestandteil eines Bremssystems 10 des Fahrzeugs 1. Die Bremseinrichtungen 6 bis 9 sind jeweils mit einem Hauptbremszylinder 11 verbunden, was in der Figur nicht gezeigt ist. Lediglich angedeutet ist, dass die Bremseinrichtungen 6 bis 9 jeweils über ein hier nicht dargestelltes Querschnittsverstellglied an einen Zwischenspeicher 12 und eine Fördereinrichtung 13 angeschlossen sind. Über das Querschnittsverstellglied kann gezielt Bremsfluid aus den Bremseinrichtungen 6 bis 9 abgelassen werden, um so die von den Bremseinrichtungen 6 bis 9 auf die Räder 2 bis 5 ausgeübte Bremskraft zu reduzieren. Das über die Querschnittsverstellglieder steuernd und/oder regelnd abgelassene Bremsfluid gelangt zu der Fördereinrichtung 13 beziehungsweise in den Zwischenspeicher 12. Der Volumenstrom, mit welchem das Bremsfluid die Querschnittsverstellglieder durchströmt, wird als Ablassvolumenstrom bezeichnet. Das abgelassene Bremsfluid wird mittels der Fördereinrichtung 13 wieder in den Hauptbremszylinder 11 gefördert. Die Fördereinrichtung 13 ist beispielsweise eine elektrische Förderpumpe. Kennzeichnend für die Fördereinrichtung 13 ist ihr Maximalfördervolumenstrom, also derjenige Volumenstrom, welcher mittels der Fördereinrichtung 13 maximal in Richtung des Hauptbremszylinders 11 abgeführt werden kann. Übersteigt der Ablassvolumenstrom den Maximalfördervolumenstrom, so kann das Bremsfluid nicht ausreichend schnell von den Bremseinrichtungen 6 bis 9 in den Hauptbremszylinder 11 gefördert werden, sodass sich der Zwischenspeicher 12 füllt.

Ist der Zwischenspeicher 12 vollständig gefüllt, kann kein weiteres Bremsfluid aus den Bremseinrichtungen 6 bis 9 abgelassen werden, sodass die Funktionsfähigkeit des Bremssystems 10 zumindest teilweise beeinträchtigt ist. Dieser Zustand soll daher verhindert werden. Dies wird erreicht, indem bei Auftreten eines bestimmten Betriebszustandes des Bremssystems 10 der Ablassvolumenstrom reduziert wird. Das Bremssystem 10 ist entsprechend ausgebildet beziehungsweise wird entsprechend betrieben. Der bestimmte Betriebszustand liegt beispielsweise vor, wenn eine Fehlfunktion der Fördereinrichtung 13 auftritt oder ein bestimmter Füllstand des Zwischenspeichers 12 überschritten wird. In diesem Fall wird der Ablassvolumenstrom reduziert, wobei dies idealerweise derart geschieht, dass er kleiner oder gleich dem Maximalfördervolumenstrom der Fördereinrichtung 13 ist.

Auf diese Weise kann die Fördereinrichtung 13 beziehungsweise das Bremssystem 10 kleiner beziehungsweise mit einer geringeren Leistung ausgelegt werden als aus dem Stand der Technik bekannte Einrichtungen und dennoch die Funktionsfähigkeit des Bremssystems zu jedem Zeitpunkt realisiert werden. Somit können Kosten für das Bremssystem 10 reduziert werden. Bei der Reduzierung des Ablassvolumenstroms werden üblicherweise die Kriterien Bremsperformance (Bremsweg), Fahrzeugstabilität, Ablassvolumenstrom (Volumenverbrauch) beziehungsweise Regelkomfort und Robustheit der Steuerung/Regelung gegeneinander abgewogen. Dabei ist ein Kompromiss zwischen den genannten Kriterien zu erzielen.

## Patentansprüche

1. Verfahren zum Betreiben eines Bremssystems (10) eines Fahrzeugs (1), wobei das Bremssystem (10) mindestens eine einem Rad (2,3,4,5) des Fahrzeugs (1) zugeordnete Bremseinrichtung (6,7,8,9), die zum Aufbringen einer Bremskraft auf das Rad (2,3,4,5) vorgesehen ist und der Bremsfluid aus einem Hauptbremszylinder (11) zuführbar ist, und eine über ein Querschnittsverstellglied und einen Zwischenspeicher (12) mit der Bremseinrichtung (6,7,8,9) verbundene Fördereinrichtung (13) aufweist, wobei zur Reduzierung der Bremskraft Bremsfluid aus der Bremseinrichtung (6,7,8,9) über das Querschnittsverstellglied gesteuert und/oder geregelt in den Zwischenspeicher (12) abgelassen und mittels der Fördereinrichtung (13) in den Hauptbremszylinder (11) gefördert werden kann, wobei das Ablassen des Bremsfluids aus der Bremseinrichtung (6,7,8,9) des Bremssystems (10) zumindest zeitweise mit einem Ablassvolumenstrom erfolgt, der größer ist als der Maximalfördervolumenstrom der Fördereinrichtung (13), **dadurch gekennzeichnet, dass** bei Auftreten eines bestimmten Betriebszustands des Bremssystems (10), nämlich bei einer Fehlfunktion der Fördereinrichtung (13) und/oder bei Überschreiten eines bestimmten Füllstandes des Zwischenspeichers (12), der Ablassvolumenstrom auf einen Wert kleiner oder gleich dem Maximalfördervolumenstrom reduziert und das Bremsfluid aus der Bremseinrichtung (6,7,8,9) zumindest zeitweise mit dem reduzierten Ablassvolumenstrom abgelassen wird.

2. Verfahren nach Anspruch 1, **dadurch gekennzeichnet, dass** eine Betriebsspannung der Fördereinrichtung (13) überwacht wird und bei einem Unterschreiten einer bestimmten Mindestspannung die Fehlfunktion angezeigt wird.

3. Verfahren nach einem der vorhergehenden Ansprüche, **dadurch gekennzeichnet, dass** der Füllstand des Zwischenspeichers (12) anhand eines Füllstandsmodells bestimmt wird.

4. Verfahren nach einem der vorhergehenden Ansprüche, **dadurch gekennzeichnet, dass** das Füllstandsmodell als Eingangsgrößen den Ablassvolumenstrom und mindestens eine Betriebskenngröße der Fördereinrichtung (13) aufweist.

5. Verfahren nach einem der vorhergehenden Ansprüche, **dadurch gekennzeichnet, dass** mehrere Bremseinrichtungen (6,7,8,9) an den Zwischenspeicher (12) angeschlossen werden.

6. Verfahren nach einem der vorhergehenden Ansprüche, **dadurch gekennzeichnet, dass** zum Reduzieren des Ablassvolumenstroms das Zuführen des Bremsfluids aus dem Hauptbremszylinder (11) mit einem geringeren Volumenstrom erfolgt und/oder eine Wartezeit zwischen Erreichen eines Vorgabedrucks in der Bremseinrichtung (6) und dem Ablassen des Brems-fluids größer gewählt und/oder der beim Zuführen des Bremsfluids zu erreichende Vorgabedruck reduziert wird.

7. Verfahren nach einem der vorhergehenden Ansprüche, **dadurch gekennzeichnet, dass** zum Reduzieren des Ablassvolumenstroms bei mehreren Bremseinrichtungen (6,7,8,9) das Rad (2,3,4,5) mit der höchsten Blockierneigung zum Steuern und/oder Regeln des Ablassens des Bremsfluids nicht berücksichtigt wird.

8. Bremssystem (10) eines Fahrzeugs (1), insbesondere zur Durchführung des Verfahrens gemäß einem oder mehreren der vorhergehenden Ansprüche, wobei das Bremssystem (10) mindestens eine einem Rad (2,3,4,5) des Fahrzeugs zugeordnete Bremseinrichtung (6,7,8,9), die zum Aufbringen einer Bremskraft auf das Rad (2,3,4,5) vorgesehen ist und der Bremsfluid aus einem Hauptbremszylinder (11) zuführbar ist, und eine über ein Querschnittsverstellglied und einen Zwischenspeicher (12) mit der Bremseinrichtung (6,7,8,9) verbundene Fördereinrichtung (13) aufweist, wobei zur Reduzierung der Bremskraft Bremsfluid aus der Bremseinrichtung (6,7,8,9) über das Querschnittsverstellglied gesteuert und/oder geregelt in den Zwischenspeicher (12) abgelassen und mittels der Fördereinrichtung (13) in den Hauptbremszylinder (11) gefördert werden kann, wobei das Bremssystem (10) derart ausgebildet ist, dass das Ablassen des Bremsfluids aus der Bremseinrichtung (6,7,8,9) des Bremssystems (10) zumindest zeitweise mit einem Ablassvolumenstrom erfolgt, der größer ist als der Maximalfördervolumenstrom der Fördereinrichtung (13), **dadurch gekennzeichnet, dass** bei Auftreten eines bestimmten Betriebszustands des Bremssystems (10), nämlich bei einer Fehlfunktion der Fördereinrichtung (13) und/oder bei Überschreiten eines bestimmten Füllstandes des Zwischenspeichers (12), der Ablassvolumenstrom auf einen Wert kleiner oder gleich dem Maximalfördervolumenstrom reduziert und das Bremsfluid aus der Bremseinrichtung (6,7,8,9) zumindest zeitweise mit dem reduzierten Ablassvolumenstrom abgelassen wird.

## Claims

1. Method for operating a brake system (10) of a vehicle (1), wherein the brake system (10) has at least one brake device (6, 7, 8, 9), which is assigned to a wheel (2, 3, 4, 5) of the vehicle (1) and which is provided for imparting a braking force to the wheel (2, 3, 4, 5) and to which brake fluid can be fed from a master brake cylinder (11), and a conveying device (13) which is connected by means of a cross section adjustment element and a buffer store (12) to the brake device (6, 7, 8, 9), wherein, for the reduction of the braking force, brake fluid can be discharged from the brake device (6, 7, 8, 9) into the buffer store (12) in a manner controlled in open-loop and/or closed-loop fashion by means of the cross section adjustment element and can be conveyed by means of the conveying device (13) into the master brake cylinder (11), wherein the discharge of the brake fluid from the brake device (6, 7, 8, 9) of the brake system (10) takes place at least temporarily with a discharge volume flow which is greater than the maximum conveying volume flow of the conveying device (13), **characterized in that**, in the presence of a particular operating state of the brake system (10), specifically in the event of a malfunction of the conveying device (13) and/or in the event of an overshooting of a particular fill level of the buffer store (12), the discharge volume flow is reduced to a value lower than or equal to the maximum conveying volume flow, and the brake fluid is discharged from the brake device (6, 7, 8, 9) at least temporarily with the reduced discharge volume flow.

2. Method according to Claim 1, **characterized in that** an operating voltage of the conveying device (13) is monitored, and the malfunction is signalled in the event of an undershooting of a particular minimum voltage.

3. Method according to any of the preceding claims, **characterized in that** the fill level of the buffer store (12) is determined on the basis of a fill level model.

4. Method according to any of the preceding claims, **characterized in that** the fill level model has the discharge volume flow and at least one operating characteristic variable of the conveying device (13) as input variables.

5. Method according to any of the preceding claims, **characterized in that** multiple brake devices (6, 7, 8, 9) are connected to the buffer store (12).

6. Method according to any of the preceding claims, **characterized in that**, for the reduction of the discharge volume flow, the feed of the brake fluid from the master brake cylinder (11) takes place with a lower volume flow, and/or a waiting time between an attainment of a preset pressure in the brake device (6) and the discharge of the brake fluid is selected to be greater, and/or the preset pressure to be attained during the feed of the brake fluid is reduced.

7. Method according to any of the preceding claims, **characterized in that**, for the reduction of the discharge volume flow in the case of multiple brake devices (6, 7, 8, 9), the wheel (2, 3, 4, 5) with the greatest locking tendency is not taken into consideration for the open-loop and/or closed-loop control of the discharge of the brake fluid.

8. Brake system (10) of a vehicle (1), in particular for carrying out the method according to one or more of the preceding claims, wherein the brake system (10) has at least one brake device (6, 7, 8, 9), which is assigned to a wheel (2, 3, 4, 5) of the vehicle and which is provided for imparting a braking force to the wheel (2, 3, 4, 5) and to which brake fluid can be fed from a master brake cylinder (11), and a conveying device (13) which is connected by means of a cross section adjustment element and a buffer store (12) to the brake device (6, 7, 8, 9), wherein, for the reduction of the braking force, brake fluid can be discharged from the brake device (6, 7, 8, 9) into the buffer store (12) in a manner controlled in open-loop and/or closed-loop fashion by means of the cross section adjustment element and can be conveyed by means of the conveying device (13) into the master brake cylinder (11), wherein the brake system (10) is designed such that the discharge of the brake fluid from the brake device (6, 7, 8, 9) of the brake system (10) takes place at least temporarily with a discharge volume flow which is greater than the maximum conveying volume flow of the conveying device (13), **characterized in that**, in the presence of a particular operating state of the brake system (10), specifically in the event of a malfunction of the conveying device (13) and/or in the event of an overshooting of a particular fill level of the buffer store (12), the discharge volume flow is reduced to a value lower than or equal to the maximum conveying volume flow, and the brake fluid is discharged from the brake device (6, 7, 8, 9) at least temporarily with the reduced discharge volume flow.

## Revendications

1. Procédé pour faire fonctionner un système de freinage (10) d'un véhicule (1), le système de freinage (10) possédant au moins un dispositif de freinage (6, 7, 8, 9) associé à une roue (2, 3, 4, 5) du véhicule (1), lequel est conçu pour appliquer une force de freinage à la roue (2, 3, 4, 5) et auquel du liquide de frein peut être acheminé depuis un maître-cylindre de frein (11), et un dispositif de refoulement (13) relié au dispositif de freinage (6, 7, 8, 9) par le biais d'un organe de réglage de section transversale et d'un accumulateur intermédiaire (12), en vue de réduire la force de freinage, du liquide de frein pouvant être déchargé dans l'accumulateur intermédiaire (12) hors du dispositif de freinage (6, 7, 8, 9) en étant commandé et/ou régulé par le biais de l'organe de réglage de section transversale et refoulé dans le maître-cylindre de frein (11) au moyen du dispositif de refoulement (13), la décharge du liquide de frein hors du dispositif de freinage (6, 7, 8, 9) du système de freinage (10) s'effectuant au moins temporairement avec un débit volumique de décharge qui est supérieur au débit volumique de refoulement maximal du dispositif de refoulement (13), **caractérisé en ce que** lorsqu'il se produit un état opérationnel déterminé du système de freinage (10), à savoir un défaut de fonctionnement du dispositif de refoulement (13) et/ou en cas de dépassement d'un niveau de remplissage déterminé de l'accumulateur intermédiaire (12), le débit volumique de décharge est réduit à une valeur inférieure ou égale au débit volumique de refoulement maximal et le liquide de frein est déchargé hors du dispositif de freinage (6, 7, 8, 9) au moins temporairement avec le débit volumique de décharge réduit.

2. Procédé selon la revendication 1, **caractérisé en ce qu'**une tension de service du dispositif de refoulement (13) est surveillée et dans le cas où elle devient inférieure à une tension minimale déterminée, le défaut de fonctionnement est signalé.

3. Procédé selon l'une des revendications précédentes, **caractérisé en ce que** le niveau de remplissage de l'accumulateur intermédiaire (12) est déterminé à l'aide d'un modèle de niveau de remplissage.

4. Procédé selon l'une des revendications précédentes, **caractérisé en ce que** le modèle de niveau de remplissage possède comme grandeurs d'entrée le débit volumique de décharge et au moins une grandeur caractéristique de fonctionnement du dispositif de refoulement (13).

5. Procédé selon l'une des revendications précédentes, **caractérisé en ce que** plusieurs dispositifs de freinage (6, 7, 8, 9) sont raccordés à l'accumulateur intermédiaire (12).

6. Procédé selon l'une des revendications précédentes, **caractérisé en ce qu'**en vue de réduire le débit volumique de décharge, l'acheminement du liquide de frein depuis le maître-cylindre de frein (11) est effectué avec un débit volumique réduit et/ou un temps d'attente entre l'atteinte d'une pression indiquée dans le dispositif de freinage (6) et la décharge du liquide de freinage est choisi plus grand et/ou la pression indiquée à atteindre lors de l'acheminement du liquide de frein est réduite.

7. Procédé selon l'une des revendications précédentes, **caractérisé en ce qu'**en vue de réduire le débit volumique de décharge avec plusieurs dispositifs de freinage (6, 7, 8, 9), la roue (2, 3, 4, 5) ayant la tendance au blocage la plus élevée n'est pas prise en compte pour la commande et/ou la régulation de la décharge du liquide de frein.

8. Système de freinage (10) d'un véhicule (1), notamment destiné à mettre en œuvre le procédé selon l'une ou plusieurs des revendications précédentes, le système de freinage (10) possédant au moins un dispositif de freinage (6, 7, 8, 9) associé à une roue (2, 3, 4, 5) du véhicule, lequel est conçu pour appliquer une force de freinage à la roue (2, 3, 4, 5) et auquel du liquide de frein peut être acheminé depuis un maître-cylindre de frein (11), et un dispositif de refoulement (13) relié au dispositif de freinage (6, 7, 8, 9) par le biais d'un organe de réglage de section transversale et d'un accumulateur intermédiaire (12), en vue de réduire la force de freinage, du liquide de frein pouvant être déchargé dans l'accumulateur intermédiaire (12) hors du dispositif de freinage (6, 7, 8, 9) en étant commandé et/ou régulé par le biais de l'organe de réglage de section transversale et refoulé dans le maître-cylindre de frein (11) au moyen du dispositif de refoulement (13), le système de freinage (10) étant configuré de telle sorte que la décharge du liquide de frein hors du dispositif de freinage (6, 7, 8, 9) du système de freinage (10) s'effectue au moins temporairement avec un débit volumique de décharge qui est supérieur au débit volumique de refoulement maximal du dispositif de refoulement (13), **caractérisé en ce que** lorsqu'il se produit un état opérationnel déterminé du système de freinage (10), à savoir un défaut de fonctionnement du dispositif de refoulement (13) et/ou en cas de dépassement d'un niveau de remplissage déterminé de l'accumulateur intermédiaire (12), le débit volumique de décharge est réduit à une valeur inférieure ou égale au débit volumique de refoulement maximal et le liquide de frein est déchargé hors du dispositif de freinage (6, 7, 8, 9) au moins temporairement avec le débit volumique de décharge réduit.
